# EUROPÄISCHE PATENTSCHRIFT

(11) **EP 2 582 602 B1**
(45) Veröffentlichungstag und Bekanntmachung des Hinweises auf die Patenterteilung: **01.06.2016**
(21) Anmeldenummer: 11713191.2
(22) Anmeldetag: 06.04.2011
(51) Int. Cl.: B65G 47/51

(54) **SPEICHER, INSBESONDERE PUFFERSPEICHER ZUM SPEICHERN VON FLASCHEN ODER DERGLEICHEN BEHÄLTERN**
STORE, IN PARTICULAR BUFFER STORE FOR STORING BOTTLES OR SIMILAR CONTAINERS
DISPOSITIF DE STOCKAGE, NOTAMMENT DE STOCKAGE TAMPON POUR STOCKER DES BOUTEILLES OU DES RÉCIPIENTS ANALOGUES

(30) Priorität: 15.06.2010 DE 102010023757
(43) Veröffentlichungstag der Anmeldung: 24.04.2013
(73) Patentinhaber: KHS GmbH, 44143 Dortmund (DE)
(72) Erfinder: DRENGUIS, Alfred, 21039 Börnsen (DE)
(86) Internationale Anmeldenummer: PCT/EP2011/001695
(87) Internationale Veröffentlichungsnummer: WO 2011/157313

(56) Entgegenhaltungen:
- EP-A1- 0 486 360
- EP-A1- 0 842 877
- EP-A2- 0 616 959
- WO-A1-90/01095
- DE-A1-102008 013 951
- DE-U1-202005 013 552
- FR-A1- 2 789 374

## Beschreibung

Die Erfindung bezieht sich auf einen Speicher gemäß Oberbegriff Patentanspruch 1.

In Behälterbehandlungsanlagen, insbesondere auch in Anlagen der Getränkeindustrie zum Füllen von Behältern mit einem flüssigen Füllgut, beispielsweise mit Getränk, ist es vielfach erforderlich, Pufferspeicher vorzusehen, in denen beispielsweise bei Störungen in der Anlage nicht benötigte Behälter zwischengespeichert werden. Insbesondere sind derartige Pufferspeicher in solchen Anlagen erforderlich, die einer Füllmaschine vorausgehend eine Maschine zum Herstellen der Behälter, beispielsweise eine Blasmaschine zum Herstellen der aus Kunststoff (PET) bestehenden Behälter aus Vorformlingen (Preforms) durch Blasformen aufweisen. Bei Störungen in der Füllmaschine oder in einer in der Anlage auf die Füllmaschine folgenden Maschine ist es dann notwendig, die von der Blasmaschine noch gefertigten Behälter (z.B. PET-Flaschen) in einem Pufferspeicher zwischenzuspeichern, um ein Verwerfen von überschüssigen Behältern und insbesondere auch von bereits vorerhitzten Vorformlingen zu vermeiden.

Nachteilig ist bei bekannten Pufferspeichern ihr relativ großer Platzbedarf und Bauraum bei ausreichender Speicherkapazität (Anzahl der maximal zu speichernden Behälter). Insbesondere eignen sich bekannte Pufferspeicher auch nicht für verblockte Maschinen- oder Anlagenteile, d.h. für Anlagenteile, die mehrere Maschinen, beispielsweise die Blasmaschine, die Füllmaschine, eine Verschließmaschine und eine Etikettiermaschine in enger Bauweise und ohne zusätzliche diese Maschinen verbindende Förderbänder aufweisen.

Bekannt ist aus der US 5 304 027 ein Pufferspeicher zum Speichern von Flaschen, der im Wesentlichen aus einem um eine horizontale Maschinenachse drehbar antreibbaren Rotor besteht, an dessen Umfang mehrere, sich jeweils in Rotorlängsrichtung und dabei speziell parallel zur Maschinenachse erstreckende Speichereinheiten mit jeweils einem Speicherbereich zur Aufnahme einer Vielzahl von Flaschen gebildet sind. Letztere sind in dem jeweiligen Speicherbereich mit ihrer Flaschenachse radial zur Maschinenachse orientiert. Durch Förderluft sind die Flaschen von einer Aufgabeposition in den Speicherbereich der jeweiligen Speichereinheit, entlang des Speicherbereiches sowie aus dem Speicherbereich an eine Abgabeposition zum Abführen aus dem Speicher bewegbar. Auch dieser bekannte Pufferspeicher hat zumindest den Nachteil eines relativ großen Platzbedarfs.

Eine gattungsgemäße Möglichkeit der Speicherung beschreibt die DE 10 2008 013 951 A1. darin werden Behälter im inneren ihrer Mündung an Greiffahrzeugen befestigt und über ein Schienenverteilersystem verschiedenen Behandlungs- und Pufferstationen individuell zugeführt. Die schienengebundenen Greiffahrzeuge sind verhältnismäßig aufwendig und kostenintensiv.

Aufgabe der Erfindung Ist es, einen Pufferspeicher aufzuzeigen, der einen einfachem Aufbau bei geringem Platzbedarf aufweist. Zur Lösung dieser Aufgabe ist ein Pufferspeicher entsprechend dem Patentanspruch 1 ausgebildet.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Der Ausdruck "im Wesentlichen" bedeutet im Sinne der Erfindung Abweichungen von dem jeweiligen exakten Wert um +/- 10%, bevorzugt um +/- 5%.

Die Erfindung wird im Folgenden anhand der Figuren an einem Ausführungsbeispiel naher erläutert. Es zeigen:

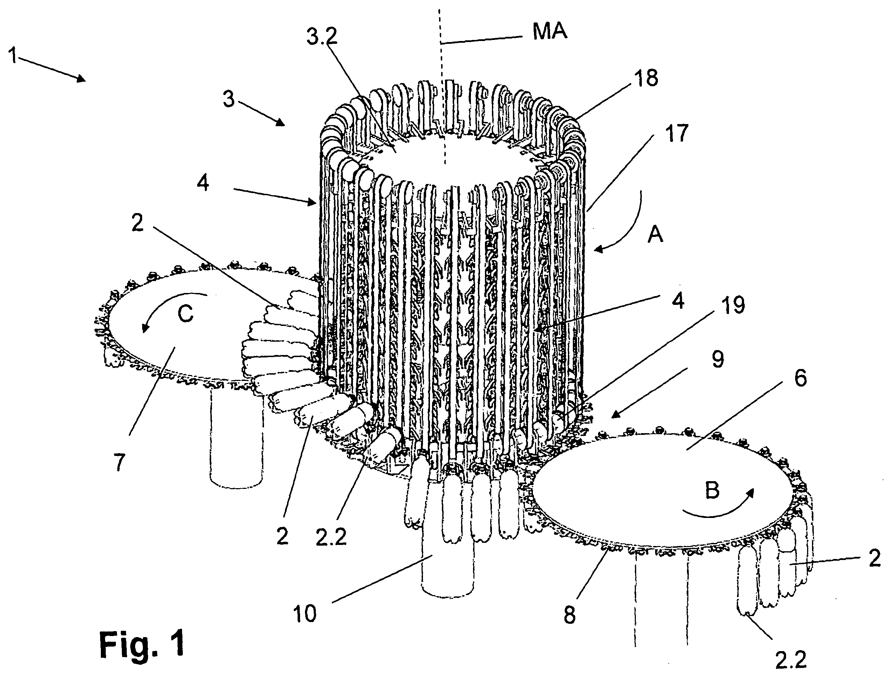

- Fig. 1: in einer schematischen perspektivischen Darstellung ein Ausführungsbeispiel eines Pufferspeichers gemäß der Erfindung für Behälter in Form von Flaschen;
- Fig. 2: in perspektivischer Darstellung einen Schnitt durch den Rotor des Pufferspeichers der Figur 1;

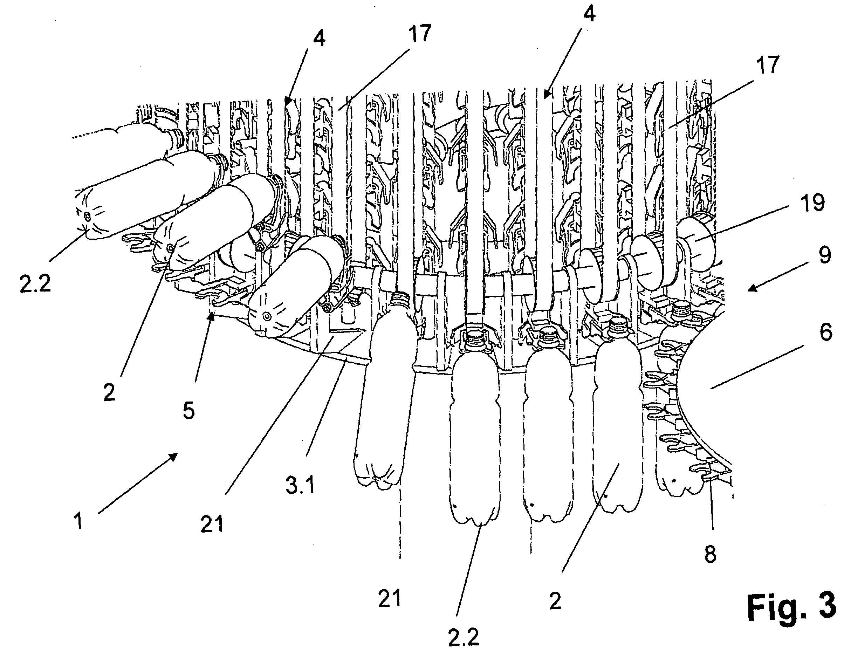

- Fig. 3 und 4: in vergrößerter perspektivischer Teildarstellung den Übergabebereich zwischen dem Rotor bzw. den dortigen Speichereinheiten und einem Transportstern;

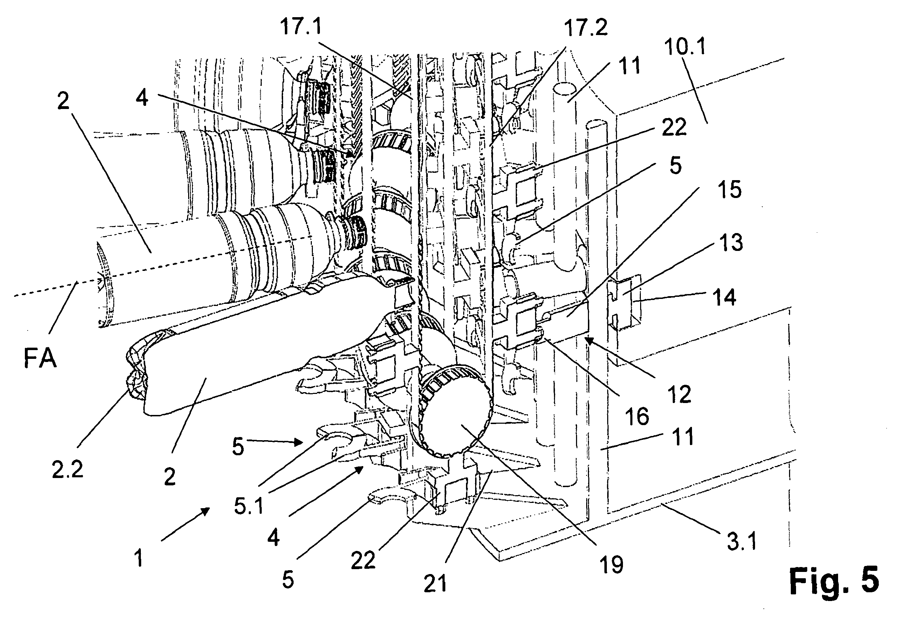

- Fig. 5: in vergrößerter perspektivischer Teildarstellung den Rotor, zusammen mit den am Umfang des Rotors vorgesehenen Speichereinheiten.

Der in den Figuren allgemein mit 1 bezeichnete Pufferspeicher dient zum Speichern oder Zwischenspeichern einer Vielzahl von Behältern in Form von Flaschen 2, die in den Figuren als PET-Flaschen dargestellt sind, und zwar in mehreren in vertikaler Richtung übereinander angeordneten Etagen auf engem Raum.

Der Pufferspeicher 1 umfasst hierfür einen um eine vertikale Maschinenachse MA umlaufend antreibbaren Rotor 3, an dessen Umfang in gleichmäßigen Winkelabständen um die Maschinenachse MA versetzt eine Vielzahl von Speichereinheiten 4 gebildet sind, die ihrerseits jeweils eine Vielzahl von Aufnahmen oder Haltern in Form von Flaschen- oder Behältergreifern 5 aufweisen, mit denen die im Pufferspeicher 1 gespeicherten Flaschen 2 in Speicherbereichen in mehreren, in vertikaler Richtung übereinander angeordneten ringförmigen Etagen und mit ihrer Flaschenachse FA radial zur Maschinenachse MA orientiert gehalten werden, wie dies nachstehend noch näher beschrieben wird.

Dem Rotor 3 bzw. den Speichereinheiten 4 sind zwei Flaschentransportsterne 6 und 7 zugeordnet, die jeweils um eine vertikale Achse synchron mit dem Rotor 3 aber gegenläufig zur Drehrichtung A des Rotors 3 antreibbar sind, wie dies mit dem Pfeil B für den Transportstern 6 bzw. mit dem Pfeil C für den Transportstern 7 angedeutet ist. An ihrem Umfang weisen die Transportsterne 6 und 7 jeweils eine Vielzahl von Flaschenaufnahmen in Form von Flaschen- oder Behältergreifern 8 auf, und zwar in einem Winkel- oder Teilungsabstand, der dem Teilungsabstand der Speichereinheiten 4 am Rotor 3 entspricht, sodass in der nachstehend noch näher beschriebenen Weise durch die Synchronisierung der Antriebe immer dann, wenn sich ein Behältergreifer 8 an der Behälterübergabeposition 9 zwischen dem Transportstern 6 und dem Rotor 3 befindet, sich dort auch ein Behältergreifer 5 einer Speichereinheit 4 in seiner Aufnahme- und Abgabeposition auf einem unteren Ausgangsniveau befindet. Gleiches gilt analog für die Behälterübergabeposition zwischen dem Rotor 3 und dem Transportstern 7.

Der Rotor 3 besteht bei der dargestellten Ausführungsform im Wesentlichen aus einem unteren ringartigen Rotorelement 3.1, welches ein achsgleich mit der Maschinenachse MA angeordnetes und mit dem Rotor 3 nicht umlaufendes Maschinenelement 10 umschließt, sowie aus einem oberen scheibenartigen Rotorelement 3.2. Die beiden Rotorelemente 3.1 und 3.2, die mit ihren Oberflächenseiten senkrecht zur Maschinenachse MA orientiert sind, sind durch eine Vielzahl von innen liegenden und mit ihrer Längserstreckung parallel zur Maschinenachse MA orientierten Führungsstangen 11 zu einer käfigartigen Struktur des Rotors 3 miteinander verbunden. Mit nicht dargestellten Lagern ist der Rotor 3 an dem in den Figuren nur sehr schematisch säulenartig dargestellten Maschinenteil 10 gelagert.

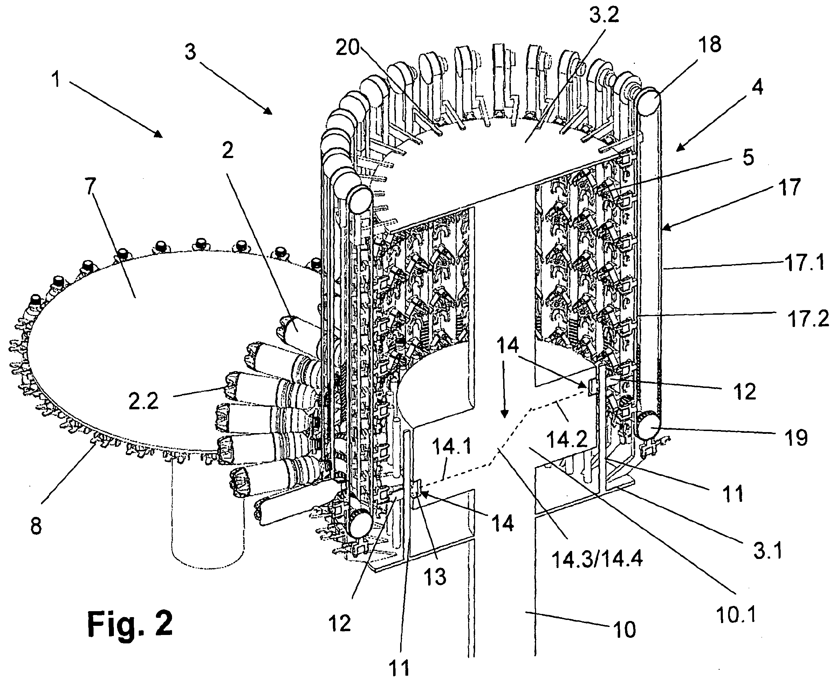

Jeder Speichereinheit 4 ist bei der dargestellten Ausführungsform eine Führungsstange 11 zugeordnet, an der bei der dargestellten Ausführungsform in Führungsstangenlängsrichtung jeweils ein steuerbarer Mitnehmer 12 geführt ist, der an seinem bezogen auf die Maschinenachse MA von der jeweiligen Führungsstange 11 radial nach innen wegstehenden Ende mit einer Kurvenrolle 13 versehen ist, die um eine Achse radial zur Maschinenachse MA frei drehbar in eine Steuerkurve 14 eingreift. Letztere ist an einem Abschnitt 10.1 des mit dem Rotor 3 nicht mitbewegten Maschinenteils 10 ausgebildet, und zwar derart, dass die in sich geschlossene Steuerkurve 14 zwei horizontale, d.h. jeweils in Ebenen senkrecht zur Maschinenachse MA verlaufende kreisbogenförmige Abschnitte 14.1 und 14.2 auf unterschiedlichem Höhenniveau und zwei die Abschnitte 14.1 und 14.2 mit einander verbindende schräg, d.h. schraubenlinienförmige Abschnitte 14.3 bzw. 14.4 aufweist, wie dies in der Figur 2 mit der unterbrochenen Linie angedeutet ist.

Bei der dargestellten Ausführungsform besteht jeder jeweils einer Speichereinheit 4 zugeordnete Mitnehmer 12 aus einem pneumatisch betätigbaren Rastzylinder dessen Zylindergehäuse 15 schlittenartig an der zugehörigen Führungsstange 11 geführt ist und der im aktivierten Zustand in der nachstehend beschriebenen Weise mit seinem Kolben16 mit der zugehörigen Speichereinheit 4 zusammenwirkt.

Jede Speichereinheit 4 umfasst einen eine geschlossene Schlaufe bildenden Riemen 17, der bei der dargestellten Ausführungsform als Zahnriemen ausgebildet ist und jeweils über ein oberes Riemenrad 18 und ein unteres Riemenrad 19 derart geführt ist, dass jeder Riemen 17 eine Schlaufe bildet. Die sich zwischen den Riemenrädern 18 und 19 erstreckenden Schlaufenabschnitte bzw. Riemenlängen 17.1 und 17.2 sind in vertikaler Richtung, d.h. parallel zur Maschinenachse MA orientiert. Die von den Riemen 17 gebildete Schlaufe jeder Speichereinheit 4 ist weiterhin bei der dargestellten Ausführungsform in einer gemeinsamen, radial oder im Wesentlichen radial zur Maschinenachse MA orientierten Ebene mit der dieser Speichereinheit zugeordneten Führungsstange 11 angeordnet, allerdings derart, dass die von dem Riemen 17 gebildete Schlaufe bezogen auf die Maschinenachse MA von der zugeordneten Führungsstange 11 radial beabstandet und gegenüber der Führungsstange 11 radial nach außen versetzt ist. Die Riemenräder 18 und 19 sind jeweils um Achsen tangential zu einer gedachten, die Maschinenachse MA konzentrisch umschließenden Kreislinie drehbar gelagert, und zwar bei der dargestellten Ausführungsform derart, dass die Achsen sämtlicher Riemenräder 18 und 19 denselben radialen Abstand von der Maschinenachse MA aufweisen.

Zur Lagerung der oberen Riemenräder 18 sind am Umfang des kreisscheibenartigen Rotorelementes 3.2 Lagerarme 20 vorgesehen, die über den Umfang sowie auch über die Oberseite des Rotorelementes 3.2 wegstehen und an deren oberen, freien Ende das Lager für das zugehörige Riemenrad 18 ausgebildet ist.

Die unteren Riemenräder 18 sind jeweils zwischen zwei platinenartigen, an der Oberseite des ringförmigen Rotorteils 3.1 vorgesehenen platinenartigen Lagerelementen 21 gelagert.

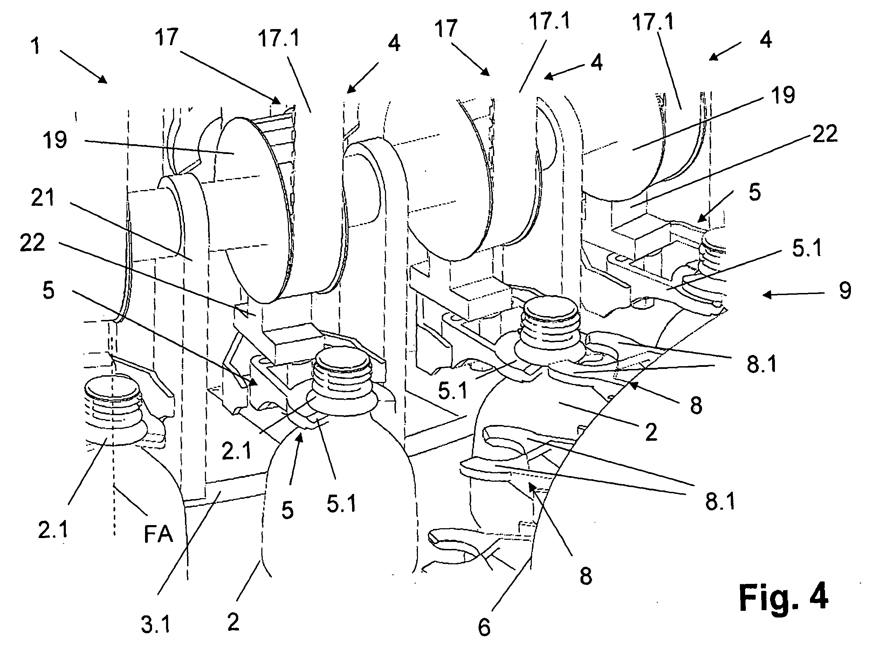

Die Behältergreifer 5 und 8 weisen bei der dargestellten Ausführungsform die dem Fachmann von Behälter- oder Flaschengreifern bekannte Ausbildung aus und bestehen jeweils aus zwei greiferzangenartigen Greiferelementen 5.1 (Behältergreifer 5) bzw. 8.1 (Behältergreifer 8), die relativ zueinander schwenkbar durch Federmittel in einen greifenden Zustand vorgespannt die jeweilige Flasche 2 an ihrem die Flaschenmündung bildenden Flaschenhals halten, bevorzugt unterhalb eines dort vorgesehenen und insbesondere bei PET-Flaschen üblichen Halsringes 2.1, wie dies besonders deutlich in der Figur 4 dargestellt ist.

An jedem Riemen 17 sind auf einer Teillänge und bezogen auf die Schlaufe außen liegend in gleichmäßigen Abständen mehrere Halteelemente 22 befestigt, die von dem betreffenden Riemen 17 in einer in der Schlaufenebene dieses Riemens liegenden Achsrichtung wegstehen und an ihrem freien, den Riemen 17 entfernt liegenden Ende jeweils einen Behältergreifer 5 aufweisen.

Die Anzahl der an jedem Riemen 17 vorgesehenen Halteelemente 22 mit Behältergreifern 5 ist so gewählt, dass in einem Extremzustand jeder Speichereinheit 4 sich sämtliche Behältergreifer 5 an der bezogen auf die Maschinenachse MA radial innen liegenden, zwischen den Riemenrädern 18 und 19 erstreckenden Riemenlänge 17.2 angeordnet sind, und zwar mit Ausnahme eines in der Aufnahme- und Abgabeposition angeordneten Behältergreifer 5, der in dieser Position unterhalb des unteren Umlenkbereichs oder Wendepunktes des Riemens 17 bezogen auf die Maschinenachse MA radial über den Umfang des Rotors 3 und insbesondere auch des Rotorteils 3.1 für eine Aufnahme oder Abgabe einer Flasche 2 vorsteht. In einem zweiten Extremzustand der Speichereinheit 4 befinden sich sämtliche Behältergreifer 5 an der bezogen auf die Maschinenachse MA radial außen liegenden Riemenlänge 17.1, und zwar wiederum mit Ausnahme eines Behältergreifers 5, der die Aufnahme- und Abgabeposition eingenommen hat und über den Rotor 3 bezogen auf die Maschinenachse MA radial wegsteht. Es versteht sich, dass durch entsprechendes Bewegen des jeweiligen Riemens 17 weitere Zustände zwischen diesen Extremen eingenommen werden können, wobei in jedem Zustand sich aber ein Behältergreifer 5 an der Aufnahme- und Abgabeposition befindet, deren Höhenniveau auch dem Niveau der Übergabeposition 9 entspricht.

Bei der dargestellte Ausführungsform stehen die Behältergreifer 5 von ihren Halteelementen 22 jeweils in ein und derselben Umfangsrichtung der von dem Riemen 17 gebildeten Schlaufe weg, d.h. derart, dass die Behältergreifer 5 auf der radial innen liegenden Riemenlänge parallel zu dieser Riemenlänge 17.2 und von dem zugehörigen Halteelemente 22 nach unten wegstehen und auf der bezogen auf die Maschinenachse MA radial außenliegenden Riemenlänge 17.1 wiederum parallel zu dieser Riemenlänge, aber von dem zugehörigen Halteelement 22 nach oben wegstehend orientiert sind.

Für den Pufferspeicher 1 sind verschiedene Betriebszustände möglich:

### Speichern von Flaschen 2 im Pufferspeicher 1

Zum Einbringen bzw. Speichern von Flaschen 2 im Pufferspeicher 1 bzw. in den Speichereinheiten 4 werden bei umlaufenden Rotor 3 und umlaufenden Transportsternen 6 und 7 die zunächst an den Behältergreifern 8 beispielsweise des Transportsternes an ihrem Flaschenhals hängend gehaltenen und mit ihren Flaschenachsen FA vertikal orientierten Flaschen 2 an der Behälterübergabe 9 nacheinander jeweils an einen in der untersten Position befindlichen Behältergreifer 5 einer Speichereinheit 4 übergeben, an der die betreffende Flasche 2 dann durch ein gesteuertes Bewegen des zugehörigen Riemens 17 in den Speicherbereich auf ein erstes Speicherniveau angehoben wird, auf dem die Flaschen 2 mit ihren Flaschenachsen FA horizontal bzw. radial zur Maschinenachse MA orientiert und mit dem Flaschenboden 2.2 außen liegend angeordnet sind, wobei dann an jeder Speichereinheit 4 sich erneut ein Behältergreifer 5 zur Aufnahme einer weiteren Flasche 2 an der Aufnahme- und Abgabeposition auf dem Ausgangsniveau befindet.

Das gesteuerte Bewegen des jeweiligen Riemens 17 und damit das gesteuerte Anheben der jeweiligen Flasche 2 auf das Speicherniveau erfolgt durch Aktivieren des zugehörigen Mitnehmers 12, der im aktivierten Zustand in Wirkungseingriff mit der radial innen liegenden Riemenlänge 17.2 der betreffenden Speichereinheit 4 bzw. mit einem dortigen Halteelement 22 steht und dem abfallenden Abschnitt 14.3 der Steuerkurve 14 folgend die radial innen liegende Riemenlänge 17.2 nach unten zieht und damit eine Bewegung der radial außen liegenden Riemenlänge 17.1 mit den dortigen Behältergreifern 5 um einen dem axialen Abstand der Steuerkurvenabschnitte 14.1 und 14. 2 entsprechenden Speicherhub nach oben bewirkt. Es besteht also die Möglichkeit, dass bei jedem vollem Umlauf des Rotors 3 von jeder Speichereinheit 4 jeweils eine Flasche 2 an der Aufnahme- und Abgabeposition aufgenommen und dann mit dem Speicherhub nach oben bewegt wird, sodass letztlich eine Vielzahl von mit ihren Flaschenachsen FA radial zur Maschinenachse MA orientierten Flaschen 2 in einer Vielzahl von in vertikaler Richtung übereinander angeordneten Speicherebenen im Pufferspeicher 1 aufgenommen sind.

Bei der dargestellten Ausführungsform weist der Pufferspeicher 1 zusätzlich zu dem Ausgangsniveau sieben Speicherebenen mit jeweils unterschiedlichem Speicherniveau auf. Um bei möglichst geringer Bauhöhe bzw. bei möglichst geringem Achsabstand der Riemenräder 18 und 19 der Speichereinheiten 4 eine möglichst große Speicherkapazität für den Pufferspeicher 1 und dessen Speicherbereiche zu erreichen, sind die Behältergreifer 5 am Riemen 17 möglichst dicht aufeinander folgend vorgesehen, wobei aber der Achsabstand der Behältergreifer 5 auf jeden Fall etwas größer ist als der Durchmesser der Flaschen 2.

### Ausbringen von Flaschen 2 aus dem Pufferspeicher 1

Das Ausbringen von Flaschen 2 aus dem Pufferspeicher 1 erfolgt in umgekehrter Weise beginnend mit den Flasche 2 der untersten Speicherebene der Speicherbereiche so, dass die Behältergreifer 5 dieser untersten Speicherebene mit den an ihnen gehaltenen Flaschen 2 durch entsprechende Ansteuerung der Riemen 17 der Speichereinheiten 4 auf die Aufnahme- und Abgabeposition abgesenkt werden, und zwar beispielsweise vor Erreichen der Behälterübergabe 9 und durch entsprechende Aktivierung der Mitnehmer 12, die dabei dem ansteigenden Abschnitt 14.4 der Steuerkurve 14 folgend die jeweils innen liegende Riemenlänge 17.2 nach oben bewegen und dadurch die an der äußeren Riemenlänge 17.1 vorgesehenen Behältergreifer 5 um den Speicherhub auf die Aufnahme- und Abgabeposition bzw. auf das Ausgangsniveau zurück bewegen, auf dem die Flaschen 2 dann wiederum in Normallage, d.h. mit ihrer Flaschenachse FA in vertikaler Richtung orientiert beispielsweise an der Behälterübergabe 9 an den Transportstern 6 oder an der der Behälterübergabe 9 entsprechenden Behälterübergabe an den Transportstern 7 weitergeleitet werden.

### Durchlaufbetrieb

Ist eine Speicherung von Flaschen 2 im Pufferspeicher 1 nicht erforderlich, so besteht die Möglichkeit, die Flasche 2 beispielsweise über den Transportstern 6 zuzuführen, jeweils an der Behälterübergabe 9 einzeln an einen in der Aufnahme- und Abgabeposition auf dem Ausgangsniveau befindlichen Behältergreifer 5 der Speichereinheiten 4 zu übergeben und mit den auf dem Ausgangsniveau verbleibenden Behältergreifern 5 und bei umlaufendem Rotor 3 an den Transportstern 7 weiter zu leiten.

Die Steuerung der Mitnehmer 12 bzw. deren Rastzylinder kann beispielsweise so erfolgen, dass die Mitnehmer 12 in den horizontalen Abschnitt 14.1 und 14.2 der Steuerkurve 14 stets aktiviert sind, in den Abschnitten 14.3 und 14.4 der Steuerkurve 14 aber nur beim Einbringen von Flaschen 2 in den jeweiligen Speicherbereich bzw. zur Abgabe von Flaschen 2 aus dem Speicherbereich aktiviert werden.

Die in der Aufnahme- und Abgabeposition bzw. auf dem Ausgangsniveau und dabei auf den unteren Wendepunkt der Riemen 17 angeordneten Behältergreifer 5 ermöglichen in diesem Betriebszustand (Durchlaufbetrieb) also einen unterbrechungsfreien Transport der Flaschen 2 vom Transportstern 6 an den Transportstern 7, d.h. von einer Behälteraufgabe an eine Behälterabgabe.

Die Riemen 17 bilden bei der dargestellten Ausführungsform ein Transportsystem, bei dem beim Speichern die zugeführten Flaschen 2 von der Aufnahme- und Abgabeposition bzw. von dem dortigen Ausgangsniveau auf das erste Speicherniveau des jeweiligen Speicherbereichs angehoben bzw. bei der Abgabe der Flaschen 2 aus dem Pufferspeicher 1 die jeweils auf dem ersten Speicherniveau befindlichen Flaschen 2 an die Aufnahme- und Abgabeposition bzw. auf das Ausgangsniveau abgesenkt werden, und zwar in beiden Fällen jeweils unter Schwenken der Flaschen 2 um 90° um eine Achse tangential zur Drehrichtung A des Rotors 3.

Der Pufferspeicher 1 ermöglicht bei vereinfachter konstruktiver Ausführung eine Speicherung einer Vielzahl von Flaschen 2 oder von anderen Behältern bei geringen Bauvolumen bzw. Platzbedarf und ist für unterschiedlichste Anlagen verwendbar, in denen eine Zwischenspeicherung von Flaschen 2 oder von anderen Behältern notwendig oder zweckmäßig ist. Insbesondere, aber nicht ausschließlich eignet sich der Pufferspeicher 1 als Anlagenkomponente zwischen einer Blasmaschine zum Herstellen der Flaschen 2 aus Vorformlingen (Preforms) durch Blasformen und einer Füllmaschine zum Füllen der Flaschen 2 mit einem flüssigen Füllgut, sodass die bei einer Störung der Füllmaschine oder einer anschließenden Maschine (z.B. Verschließmaschine oder Etikettiermaschine) von der Blasmaschine noch produzierten Flaschen 2 im Pufferspeicher 1 zumindest bis zur Behebung der Störung zwischengespeichert werden können und somit keine Notwendigkeit besteht, diese Flaschen oder vorerhitzte Preforms als nicht verwendbar zu verwerfen..

Durch die kompakte Bauweise eignet sich der Pufferspeicher 1 insbesondere auch für verblockte Anlagen oder Maschinen, d.h. für Maschinen, die zur optimalen Nutzung eines vorhandenen Raumes zu einer Maschinengruppe oder zu einem Anlagenteil eng miteinander verbunden oder zusammengefasst sind und zwischen denen keine zusätzlichen Transportelemente oder Transportbänder erforderlich sind, beispielsweise zu einer verblockten Maschinen- oder Anlagengruppe bestehend aus der Blasmaschine, der Füllmaschine, der Verschließmaschine und der Etikettiermaschine.

Zu der kompakten Bauweise trägt auch bei, dass sich die nicht benötigten bzw. nicht mit Flaschen 2 besetzten Behältergreifer 5 jeder Speichereinheit 4 an der jeweils radial innen liegenden Riemenlängen 17.2 befinden.

### Bezugszeichenliste

- 1: Pufferspeicher
- 2: Flasche
- 2.1: Mündungsflansch
- 2.2: Flaschenboden
- 3: Rotor
- 3.1,3.2: Rotorelement
- 4: Speichereinheit
- 5: Behältergreifer
- 5.1: Greiferelement
- 6, 7: Transportstern
- 8: Behältergreifer
- 8.1: Greiferelement
- 9: Behälterübergabe
- 10: Maschinenteil
- 10.1: Abschnitt des Maschinenteils 10
- 11: Führungsstange
- 12: gesteuerter Mitnehmer
- 13: Kurvenrolle
- 14: Steuerkurve
- 14.1 - 14.4: Steuerkurvenabschnitt
- 15: Zylindergehäuse
- 16: Kolben
- 17: Riemen
- 17.1, 17.2: Riemenlänge
- 18, 19: Riemenrad
- 20: Tragarm
- 21: Lagerelement
- 22: Halteelement
- A, B, C: Drehrichtung des Rotors 3 bzw. der Transportsterne 6 und 7
- FA: Flaschenachse
- MA: vertikale Maschinenachse

## Patentansprüche

1. Speicher, insbesondere Pufferspeicher zum Speichern von Flaschen oder dergleichen Behältern (2), mit einem um eine Maschinenachse (MA) umlaufend antreibbaren Rotor (3), mit mehreren um die Maschinenachse (MA) verteilten Speichereinheiten (4) am Rotor (3), die jeweils zur Aufnahme mehrerer Behälter (2) einen eich mit seiner Achsrichtung in einer Rotorlangsrichtung erstreckenden Speicherbereich bilden, in dem die gespeicherten Behälter (2) in einer Speicherlage mit ihrer Behälterachse (FA) quer oder radial zur Maschinenachse (MA) orientiert sind, sowie mit einem Transportsystem (17) zum Einbringen der Behälter in die und zum Abgeben der Behälter aus den Speicherbereichen,
**dadurch gekennzeichnet, dass**
das Transportsystem eine Vielzahl von Transportelementen (17) aufweist, von denen jeweils wenigstens ein Transportelement (17) einer jeden Speichereinheit (4) zugeordnet ist, dass an den Transportelementen (17) Behältergreifer (5) für die Behälter (2) vorgesehen sind, und dass die jeweils einen Speicherplatz für einen Behälter (2) bildenden Behältergreifer (5) mit dem zugehörigen Transportelement (17) in der Achsrichtung des jeweiligen Speicherbereichs bewegbar, vorzugsweise schrittweise bewegbar sind,
und wobei die Maschinenachse (MA) eine vertikale Achse ist, und dass das Transportsystem (17) derart ausgebildet ist, dass die Behälter (2) beim Einbringen in den jeweiligen Speicherbereich aus einer Behälternormallage, in der die Behälterachse (FA) eine vertikale Achse ist, in die Speicherlage und umgekehrt bei der Abgabe aus dem jeweiligen Speicherbereich aus der Speicherlage in die Normallage geschwenkt werden.

2. Speicher nach Anspruch 1, **dadurch gekennzeichnet dass** der Antrieb für die Transportelemente derart ausgebildet ist, dass sich am Ende jedes Bewegungsschrittes ein Behältergreifer an einer Aufnahme und/oder Abgabeposition der jeweiligen Speichereinheit (4) zur Übernahme eines zu speichernden Behälters oder zur Abgabe eines Behälters aus dem Speicher befindet.

3. Speicher nach einem der vorhergehenden Ansprüche, **dadurch gekennzeichnet, dass** die Speichereinheiten (4) oder deren Speicherbereiche für eine Anordnung der gespeicherten Behälter (2) mit einem Behälterboden (2.2) bezogen auf die Maschinenachse (MA) radial außen liegend ausgebildet sind.

4. Speicher nach einem der vorhergehenden Ansprüche, **dadurch gekennzeichnet, dass** das jeweilige Transportelement ein band-, ketten- oder riemenartiges Transportelement (17) Ist, welches sich mit wenigstens einer Länge in der Achsrichtung der jeweiligen Speichereinheit (4) erstreckt, und dass die Halter (5) zumindest auf einer Teillänge des Transportelementes (17) in Transportelementlängsrichtung aufeinender folgend vorgesehen sind.

5. Speicher nach Anspruch 4, **dadurch gekennzeichnet, dass** das jeweilige Transportelement (17) eine in sich geschlossene Schlaufe zwischen wenigstens zwei Umlenkbereichen (18, 19) oder dortigen Umlenkelementen oder -rädern bildet, und zwar bevorzugt eine Schlaufe, deren Schlaufenebene radial zur Maschinenachse (MA) orientiert ist, dass sich wenigstens eine Transportelementlänge (17.1) und damit eine dieser Transportelementlänge (17.1) entsprechenden Schlaufenlänge in der Achsrichtung des jeweiligen Speicherbereiche erstreckt, und dass auf dieser Schlaufenlänge die Halter (5) mit dem Transportelement (17) bewegbar sind.

6. Speicher nach Anspruch 5, **dadurch gekennzeichnet, dass** die Halter (5) an dem jeweiligen Transportelement (17) derart angeordnet sind, dass sie an wenigstens einem Umlenkbereich (18, 19), vorzugsweise an einem unteren Umlenkbereich (19) für ein Greifen und Freigeben der Behälter (2) In ihrer Normallage und im jeweiligen Speicherbereich für ein Halten der Behälter (2) in ihrer Speicherlage orientiert sind.

7. Speicher nach einem der vorhergehenden Ansprüche, **dadurch gekennzeichnet, dass** Antriebsmittel für das Transportsystem oder die Trensportelemente (17) vorgesehen sind, vorzugsweise jeweils individuelle Antriebsmittel für das wenigstens eine Transportelement (17) jeder Speichereinheit (4), und dass die Antriebsmittel zwischen einem ersten Betriebsmodus, in welchem eine Bewegung des Transportsystems oder jeweiligen Transportelementes nicht erfolgt, einem zweiten Betriebsmodus, in welchem das Transportsystem oder das wenigstens eine Transportelement (17) der jeweiligen Speichereinheit (4) für das Einbringen eines Behälters (2) in den Speicherbereich dieser Speichereinheit (4) bewegt wird, und einem dritten Betriebsmodus steuerbar sind, in welchem das wenigstens eine Transportelement (17) der jeweiligen Speichereinheit (4) für ein Ausbringen eines Behälters (2) aus dem Speicherbereich dieser Speichereinheit (4) bewegt wird.

8. Speicher nach Anspruch 7, **dadurch gekennzeichnet, dass** die Antriebsmittel von steuerbaren Mitnehmer (12) gebildet sind, welche mit wenigstens einer mit dem Rotor (3) nicht umlaufenden Steuerkurve (14) zusammenwirken und zwischen einem aktivierten Zustand, in welchem die Mitnehmer (12) für den zweiten oder dritten Betriebsmodus jeweils antriebsmäßig mit dem Transportsystem oder mit den Transportelementen (17) zum Bewegen des Transportsysteme oder der Transportelemente (17)entsprechend dem Verlauf der Steuerkurve (14) verbunden sind, und einem deaktivierten Zustand steuerbar sind, in welchem für den ersten Betriebsmodus eine antriebsmäßige Verbindung zwischen den Mitnehmern (12) und dem Transportsystem oder den Transportelementen (17) nicht besteht, wobei die Steuerkurve (14) wenigstens zwei bezogen auf die Maschinenachse (MA) axial gegeneinander versetzte kreisbogenförmige Steuerkurvenabschnitte (14.1, 14.2), deren Krümmungsachse die Maschinenachse (MA) ist, sowie zwei diese krelsbogenförmigen Kurvenabschnitte (14.1, 14.2) mit einander verbindende schraubenlinienförmige Kurvenabschnitte (14.3, 14,4) aufweist, deren Achse ebenfalls die Maschinenachse (MA) ist

9. Speicher nach einem der vorhergehenden Ansprüche, **gekennzeichnet durch** wenigstens einen äußeren Transporteur, vorzugsweise in Form eines Transportsternes (6, 7) zum Zuführen der Behälter (2) an die Speichereinheiten (4) oder zum Abführen der Behälter (2) aus den Speichereinheiten.

10. Speicher nach Anspruch 9, **dadurch gekennzeichnet, dass** zwei äußere Transporteure (6, 7) und der zwischen diesen angeordnete Rotor (3) eine Transportstrecke für die Behälter (2) bilden, die einen unterbrechungsfreien Transport der Behälter (2) ohne ihre Speioherung in der Speichereinheit (4) ermöglichen.

## Claims

1. Store, in particular buffer store, for storing bottles or similar containers (2), comprising a rotor (3) that can be driven in a rotational manner about a machine axis (MA) and comprising multiple storing units (4) on the rotor (3), said storing units being distributed about the machine axis (MA), each said storing unit forming a storing region that extends with the axial direction thereof in a longitudinal direction of the rotor in order to receive multiple containers (2), in which the stored containers (2) are oriented in a stored position with their container axis (FA) transverse or radial to the machine axis (MA), and with a transporting system (17) for introducing the containers into and for dispensing the containers (2) out of the storing regions,
**characterised in that**
the transporting system comprises a plurality of transport elements (17), of which, in each case, at least one transporting element (17) is allocated to each storing unit (5), and **in that** container grippers (5) for the containers (2) are provided at the transport elements (17), and that the container grippers (5), in each case form a storage space for a container (2), which can be transported with the associated transporting element (17) in the axial direction of the respective storage region, preferably step by step,
and wherein the machine axis (MA) is a vertical axis, and that the transport system (17) is configured in such a way that the containers (2), on being introduced into the respective storing region, are pivoted out of a normal container position, in which the container axis (FA) is a vertical axis, into the storing position and, on the dispensing out of the respective storing region, are conversely pivoted out of the storing position into the normal position.

2. Store according to claim 1, **characterised in that** the drive for the transport elements is configured in such a way that, at the end of each movement step, a container gripper is located at a reception and/or dispensing position of the respective storing unit (4) for taking over a container which is to be stored or for dispensing a container out of the store.

3. Store according to any one of the preceding claims, **characterised in that** the storing units (4) or their storing regions are configured for an arrangement of the stored containers (2) with a container base (2.2) located radially outwards related to the machine axis (MA).

4. Store according to any one of the preceding claims, **characterised in that** the respective transporting element is a band, chain, or belt-type transporting element (17), which extends with at least one length in the axial direction of the respective storing unit (4), and that the holders (5) are provided following one another on at least one part length of the transporting element (17) in the longitudinal direction of the transport element.

5. Store according to claim 4, **characterised in that** the respective transporting element (17) forms a closed loop between at least two deflection regions (18, 19), or defection elements or wheels located there, and specifically preferably a loop of which the loop plane is oriented radially to the machine axis (MA), that at least one transporting element length (17.1), and therefore a loop length corresponding to this transporting element length (17.1), extends in the axial direction of the respective storing region, and that the holders (5) can be transported with the transporting element (17) on this loop length.

6. Store according to claim 5, **characterised in that** the holders (5) are arranged at the respective transporting element (17) in such a way that they are oriented in at least one deflection region (18, 19), preferably at a lower deflection region (19), for gripping and releasing the containers (2) in their normal position and, in the respective storing region, for holding the containers (2) in their storing position.

7. Store according to any one of the preceding claims, **characterised in that** drive means for the transport system or transport elements (17) are provided, preferably in each case individual drive means for the at least one transport element (17) of each storing unit (4), and that the drive means can be controlled between a first operating mode, in which a movement of the transport system or respective transport element does not take place, a second operating mode, in which the transport system or the at least one transport element (17) of the respective storing unit (4), for the introduction of a container (2), is transported into the storing region of this storing unit (4), and a third operating mode, in which the at least one transport element (17) of the respective storing unit (4), for the dispensing of a container (2), is transported out of the storing region of this storing unit (4).

8. Store according to claim 7, **characterised in that** the drive means are formed of controllable catches (12), which interact with at least one control curve (14), not circulating with the rotor (3), and can be controlled between an activated state, in which the catches (12), for the second or third operating mode, are connected in each case, in respect of their drive, to the transport system or the transport elements (17), for moving the transport system or the transport elements (17) corresponding to the course of the control curve (14), and a deactivated state, in which, for the first operating mode, a connection in respect of drive does not pertain between the catches (12) and the transport system or the transport elements (17), wherein the control curve (14) comprises at least two arc-shaped control curve sections (14.1, 14.2), offset against one another in relation to the machine axis (MA), of which the curvature axis is the machine axis (MA), as well as two helical-shaped curve sections (14.3, 14:4), connecting these two arc-shaped curve sections (14.1, 14.2) to one other, the axis of which is likewise the machine axis (MA).

9. Store according to any one of the preceding claims, **characterised by** at least one outside transporter, preferably in the form of a transport star (6, 7) for conveying the containers (2) to the storing units (4) or for conveying the containers (2) out of the storing units.

10. Store according to claim 9, **characterised in that** two outer transporters (6, 7), and the rotor (3) arranged between them, form a transport segment for the containers (2), which allow for an uninterrupted transport of the containers (2) without their storage in the storage unit (4).

## Revendications

1. Dispositif de stockage, en particulier dispositif de stockage tampon pour le stockage de bouteilles ou de récipients analogues (2) avec un rotor (3) entraînable en rotation autour d'un axe de machine (MA), avec plusieurs unités de stockage (4) réparties autour de l'axe de machine (MA) sur le rotor (3) qui forment respectivement pour la réception de plusieurs récipients (2) une zone de stockage s'étendant avec son sens axial dans un sens longitudinal de rotor, dans laquelle les récipients stockés (2) sont orientés dans une position de stockage avec leur axe de récipient (FA) transversalement ou radialement à l'axe de machine (MA), ainsi qu'avec un système de transport (17) pour l'introduction des récipients dans les zones de stockage et pour la sortie des récipients des zones de stockage,
**caractérisé en ce que**
le système de transport présente une pluralité d'éléments de transport (17), dont respectivement au moins un élément de transport (17) est associé à chaque unité de stockage (4), **en ce que** sur les éléments de transport (17), des pinces de récipient (5) pour les récipients (2) sont prévues, et **en ce que** les pinces de récipient (5) formant respectivement un emplacement de stockage pour un récipient (2) avec l'élément de transport afférent (17) sont mobiles dans le sens axial de la zone de stockage concernée, de préférence sont mobiles de préférence par étapes,
et l'axe de machine (MA) étant un axe vertical, et **en ce que** le système de transport (17) est réalisé de telle manière que les récipients (2) soient pivotés lors de l'introduction dans la zone de stockage concernée depuis une position normale de récipient, dans laquelle l'axe de récipient (FA) est un axe vertical, dans la position de stockage et inversement lors de la sortie de la zone de stockage concernée, de la position de stockage à la position normale.

2. Dispositif de stockage selon la revendication 1, **caractérisé en ce que** l'entraînement pour les éléments de transport est réalisé de telle manière qu'une pince de récipient se trouve à la fin de chaque étape de déplacement dans une position de réception et/ou de sortie de l'unité de stockage concernée (4) pour la prise en charge d'un récipient à stocker ou pour la sortie d'un récipient du dispositif de stockage.

3. Dispositif de stockage selon l'une quelconque des revendications précédentes, **caractérisé en ce que** les unités de stockage (4) ou leurs zones de stockage sont réalisées de manière à se trouver radialement à l'extérieur pour un agencement des récipients (2) stockés avec un fond de récipient (2.2) par rapport à l'axe de machine (MA).

4. Dispositif de stockage selon l'une quelconque des revendications précédentes, **caractérisé en ce que** l'élément de transport concerné est un élément de transport (17) de type bande, chaîne ou courroie, lequel s'étend avec au moins une longueur dans le sens axial de l'unité de stockage (4) concernée et **en ce que** les supports (5) sont prévus se suivant au moins sur une longueur partielle de l'élément de transport (17) dans le sens longitudinal d'élément de transport.

5. Dispositif de stockage selon la revendication 4, **caractérisé en ce que** l'élément de transport concerné (17) forme une boucle fermée en soi entre au moins deux zones de renvoi (18, 19) ou éléments ou roues de renvoi qui s'y trouvent et ce de préférence une boucle, dont le plan de boucle est orienté radialement à l'axe de machine (MA), **en ce qu'**au moins une longueur d'élément de transport (17.1) et ainsi une longueur de boucle correspondant à cette longueur d'élément de transport (17.1) s'étendent dans le sens axial de la zone de stockage concernée et **en ce que** les supports (5) sont mobiles sur cette longueur de boucle avec l'élément de transport (17).

6. Dispositif de stockage selon la revendication 5, **caractérisé en ce que** les supports (5) sont agencés sur l''elément de transport concerné (17) de telle manière qu'ils soient orientés sur au moins une zone de renvoi (18, 19), de préférence sur une zone de renvoi inférieure (19) pour une préhension et une libération des récipients (2) dans leur position normale et dans la zone de stockage concernée pour un maintien des récipients (2) dans leur position de stockage.

7. Dispositif de stockage selon l'une quelconque des revendications précédentes, **caractérisé en ce que** des moyens d'entraînement pour le système de transport ou les éléments de transport (17) sont prévus, de préférence respectivement des moyens d'entraînement individuels pour l'au moins un élément de transport (17) de chaque unité de stockage (4) et **en ce que** les moyens d'entraînement peuvent être commandés entre un premier mode de fonctionnement, dans lequel un mouvement du système de transport ou de l'élément de transport concerné n'est pas effectué, un deuxième mode de fonctionnement, dans lequel le système de transport ou l'au moins un élément de transport (17) de l'unité de stockage (4) concernée est déplacé pour l'introduction d'un récipient (2) dans la zone de stockage de cette unité de stockage (4), et un troisième mode de fonctionnement, dans lequel l'au moins un élément de transport (17) de l'unité de stockage (4) concernée est déplacé pour une répartition d'un récipient (2) hors de la zone de stockage de cette unité de stockage (4).

8. Dispositif de stockage selon la revendication 7, **caractérisé en ce que** les moyens d'entraînement sont formés par des entraîneurs commandables (12) qui coopèrent avec au moins une came de commande (14) ne tournant pas avec le rotor (3) et sont commandables entre un état activé, dans lequel les entraîneurs (12) pour le deuxième ou le troisième mode de fonctionnement sont reliés respectivement en entraînement avec le système de transport ou avec les éléments de transport (17) pour le déplacement du système de transport ou des éléments de transport (17) selon l'étendue de la came de commande (14), et un état désactivé, dans lequel pour le premier mode de fonctionnement, une liaison d'entraînement entre les entraîneurs (12) et le système de transport ou les éléments de transport (17) n'existe pas, la came de commande (14) présentant au moins deux sections de came de commande (14.1, 14.2) en arc de cercle, décalées axialement l'une contre l'autre par rapport à l'axe de machine (MA), dont l'axe de courbure est l'axe de machine (MA), ainsi que deux sections de came (14.3, 14.4) hélicoïdales reliant entre elles ces sections de came (14.1, 14.2) en arc de cercle, dont l'axe est aussi l'axe de machine (MA).

9. Dispositif de stockage selon l'une quelconque des revendications précédentes, **caractérisé par** au moins un transporteur extérieur, de préférence sous la forme d'une étoile de transport (6, 7) pour l'amenée des récipients (2) sur les unités de stockage (4) ou pour l'évacuation des récipients (2) hors des unités de stockage.

10. Dispositif de stockage selon la revendication 9, **caractérisé en ce que** deux transporteurs extérieurs (6, 7) et le rotor (3) agencé entre ceux-ci forment une voie de transport pour les récipients (2), permettant un transport sans interruption des récipients (2) sans stockage dans l'unité de stockage (4).
